# FASCICULE DE BREVET EUROPEEN

(11) **EP 3 645 478 B1**
(45) Date de publication et mention de la délivrance du brevet: **07.06.2023**
(21) Numéro de dépôt: 18748995.0
(22) Date de dépôt: 25.06.2018
(51) Int. Cl.: C03C 17/34, C03C 17/36

(54) **VITRAGE A PROPRIETES ANTISOLAIRES COMPRENANT UNE COUCHE D'OXYNITRURE DE TITANE**
VERGLASUNG MIT SONNENSCHUTZEIGENSCHAFTEN MIT TITANOXYNITRIDSCHICHT
GLAZING WITH SOLAR PROTECTION PROPERTIES COMPRISING A TITANIUM OXYNITRIDE LAYER

(30) Priorité: 26.06.2017 FR 1755809; 26.06.2017 FR 1755810
(43) Date de publication de la demande: 06.05.2020
(73) Titulaire: SAINT-GOBAIN GLASS FRANCE, 92400 Courbevoie (FR)
(72) Inventeur: SINGH, Laura, 75019 Paris (FR); MONMEYRAN, Corentin, 93340 Le Raincy (FR); REYMOND, Vincent, 92160 Antony (FR); DODET, Rémy, 93220 Gagny (FR); LORENZZI, Jean, 75011 Paris (FR)
(74) Mandataire: Saint-Gobain Recherche
(86) Numéro de dépôt international: PCT/FR2018/051536
(87) Numéro de publication internationale: WO 2019/002737

(56) Documents cités:
- WO-A1-2017/067078
- DE-A1-102012 215 059
- US-A- 5 552 180
- US-A1- 2001 021 540
- US-B1- 6 586 871

## Description

L'invention se rapporte au domaine des substrats ou articles verriers, du type vitrage de bâtiments ou automobiles, comprenant à leur surface des revêtements du type couches minces leur conférant des propriétés antisolaires voire bas-émissives. Par vitrage, on entend au sens de la présente invention tout produit verrier constitué par un ou plusieurs substrats verriers, en particulier les simples vitrages, les doubles vitrages, les triples vitrages etc. La présente invention se rapporte en particulier à des vitrages feuilletés comprenant au moins deux substrats verriers liés entre eux par une couche de matière plastique comme le PVB (polyvinylbutyral) ou le PU (polyuréthane). Par antisolaire, on entend au sens de la présente invention la faculté du vitrage de limiter le flux énergétique, notamment du rayonnement Infrarouge (IR), le traversant depuis l'extérieur vers l'intérieur de l'habitation ou de l'habitacle, tout en conservant une transmission lumineuse permettant la vision au moins depuis l'intérieur vers l'extérieur du bâtiment ou de l'habitacle qu'il équipe.

Par empilement bas-émissif, on entend des empilements incorporant au moins une couche fonctionnelle fonctionnant essentiellement sur le mode de la réflexion d'une majeure partie du rayonnement IR (infrarouge) moyen.

De tels vitrages munis d'empilements de couches minces agissent ainsi sur le rayonnement solaire incident et permettent une protection solaire et/ou une isolation thermique de l'habitacle ou de l'habitation. En outre, ces revêtements doivent être esthétiquement plaisants, c'est-à-dire qu'ils doivent présenter une colorimétrie, en transmission comme en réflexion, suffisamment neutre pour ne pas incommoder les utilisateurs ou alternativement une teinte bleue ou verte, notamment dans le domaine du bâtiment. Alternativement, d'autres vitrages selon l'invention peuvent présenter une autre couleur en réflexion extérieure, notamment bronze ou toute autre couleur recherchée, voire présenter un aspect réfléchissant vu de l'extérieur du bâtiment. Ces revêtements sont de façon classique déposés par des techniques de dépôt du type CVD pour les plus simples ou le plus souvent à l'heure actuelle par des techniques de dépôt par pulvérisation sous vide, souvent appelé magnétron dans le domaine, notamment lorsque le revêtement est constitué d'un empilement plus complexe de couches successives.

Le plus souvent les empilements en couches minces ayant des propriétés de contrôle solaire comprennent une voire plusieurs couches actives. Par couche active ou encore fonctionnelle, on entend une couche agissant de manière sensible sur le flux de rayonnement solaire ou thermique traversant ledit vitrage. Une telle couche active, de façon connue, peut fonctionner soit principalement en mode de réflexion du rayonnement infrarouge incident, soit principalement en mode d'absorption du rayonnement infrarouge incident.

Notamment, les empilements les plus performants commercialisés à l'heure actuelle incorporent au moins une couche métallique du type argent fonctionnant essentiellement sur le mode de la réflexion d'une majeure partie du rayonnement IR (infrarouge) incident. Une forte réflexion du rayonnement infra-rouge moyen confère aussi la propriété de basse émissivité. Ces couches sont cependant très sensibles à l'humidité et sont donc exclusivement utilisées dans des doubles vitrages, en face 2 ou 3 de celui-ci pour être protégées de l'humidité. Les empilements selon l'invention ne comprennent pas de telles couches du type Argent (en particulier or, platine, cuivre, aluminium).

D'autres couches métalliques à fonction antisolaire ont également été décrites dans le domaine, comprenant des couches fonctionnelles du type Nb, Ta ou W ou des nitrures de ces métaux, tel que décrit par exemple dans la demande WO01/21540. Cependant, au sein de telles couches, le rayonnement solaire est cette fois absorbé et/ou réfléchi mais de manière peu sélective, c'est-à-dire que le rayonnement IR (dont la longueur d'onde est compris entre environ 780 nm et 2500 nm) et le rayonnement visible sont également absorbés/réfléchis de manière non sélective. De tels vitrages présentent ainsi pas ou peu de sélectivité, et présentent généralement une émissivité élevée.

US 2001/021540 A1 divulgue des revêtements de contrôle solaire sur les vitres de véhicules contenant des couches de nitrure de titane.

US 6 586 871 B1 divulgue des verres de panneaux comprenant des films antireflets, dans lesquels une couche de nitrure de titane est utilisée. 1

De manière classique dans le domaine des vitrages isolants, la sélectivité s'exprime le plus souvent comme le rapport entre le facteur de Transmission Lumineuse et le facteur solaire g (ou FS). Ces grandeurs sont en particulier définies dans la norme NF EN 410.

De manière connue et classique, le facteur de transmission lumineuse ou transmission lumineuse T_{L} correspond au pourcentage du flux lumineux incident, c'est-à-dire dans le domaine de longueurs d'onde 380 à 780 nm, traversant le vitrage, selon l'illuminant D₆₅.

De manière connue le facteur solaire g est lui égal au rapport de l'énergie traversant le vitrage (c'est-à-dire entrant dans le local) et de l'énergie solaire incidente. Plus particulièrement, il correspond à la somme du flux transmis directement à travers le vitrage et du flux absorbé par le vitrage (en y incluant les empilements de couches éventuellement présents à l'une de ses surfaces) puis éventuellement réémis vers l'intérieur (le local).

D'une manière générale, toutes les caractéristiques lumineuses présentées dans la présente description sont obtenues selon les principes et méthodes décrits dans la norme européenne (et française) EN 410 se rapportant à la détermination des caractéristiques lumineuses et solaires des vitrages utilisés dans le verre pour la construction.

Le but de la présente invention est ainsi de fournir des vitrages comprenant un empilement de couches leur conférant des propriétés antisolaires, avec de préférence des propriétés de basse émissivité (c'est-à-dire de réflexion de l'infrarouge lointain), par exemple une émissivité normale inférieure à 0,5, voire inférieure à 0,4 et présentant une sélectivité élevée, au sens précédemment décrit, c'est-à-dire un rapport T_{L}/g optimisé, notamment proche de 1, voire supérieur à 1, ledit empilement étant durable dans le temps sans précaution particulière.

Par émissivité, on entend l'émissivité normale et telle que mesurée dans l'annexe A de la norme ISO 10292 (1994).

Un vitrage selon un premier aspect de la présente invention permet ainsi avantageusement de sélectionner le rayonnement le traversant, en favorisant la transmission des ondes lumineuses dans le domaine du visible, c'est-à-dire dont la longueur d'onde est comprise entre environ 380 et 780 nm, en absorbant et/ou réfléchissant sélectivement la majorité des radiations infrarouges, c'est-à-dire dont la longueur d'onde est supérieure à 780 nm, en particulier les infrarouges proches, c'est-à-dire dont la longueur d'onde est comprise entre environ 780nm et environ 3000 nm, et en réfléchissant les infrarouges moyens, de 3 µm à 50 µm. De préférence, les vitrages selon ce premier aspect de la présente invention présentent une transmission lumineuse importante, c'est-à-dire typiquement supérieure à 20%, voire supérieure à 25%, voire supérieure à 30%, voire encore supérieure à 40% ou même supérieure à 50%.

Selon ce premier aspect de l'invention, il est ainsi possible de maintenir une forte illumination de la pièce ou de l'habitacle protégé par le vitrage tout en minimisant la quantité de chaleur y entrant.

Selon un autre aspect de l'invention, il est ainsi possible de limiter les transferts radiatifs entre l'intérieur et l'extérieur de la pièce ou de l'habitacle en proposant des vitrages dont l'émissivité est basse.

Selon un autre aspect optionnel de la présente invention, on cherche à fournir des vitrages antisolaires dont ledit empilement confère audit vitrage une couleur en transmission et en réflexion extérieure sensiblement neutre ou encore une teinte bleue-verte, telle que recherchée notamment dans le secteur du bâtiment.

Par couleur neutre, on entend au sens de la présente invention, dans le système de colorimétrie (L*, a*, b*), des valeurs b* et des valeurs a* proches de zéro, en particulier inférieures à 10, voire inférieures à 5, en valeurs absolues.

Par couleur bleue-verte, on entend au sens de la présente invention, dans le système de colorimétrie (L*, a*, b*), des valeurs b* négatives, en particulier inférieure à -10, voire inférieures à -15 et des valeurs a* proches de zéro, en particulier inférieures à 10, voire inférieures à 5, en valeurs absolues.

Dans le cas où le vitrage antisolaire selon l'invention est un vitrage feuilleté au sens précédemment décrit, il devient également possible d'obtenir des couleurs neutres, en particulier dont les valeurs des paramètres a* et b* sont inférieures à 5, en valeurs absolues.

Selon un autre aspect, tel qu'il est également recherché actuellement, en particulier dans le domaine du bâtiment, il est possible, selon certaines configurations de la présente invention, de fournir des vitrages présentant un effet miroir, c'est-à-dire une forte réflexion lumineuse extérieure, en particulier de l'ordre de 15 à 40%, notamment de 20 à 40%, de telle façon que le vitrage apparaisse comme une surface miroir vue de l'extérieur du bâtiment mais que la vision demeure cependant possible et aisée depuis l'intérieur vers l'extérieur du bâtiment. Une telle disposition peut entraîner une forte diminution de la transmission lumineuse à travers le vitrage et éventuellement une diminution sensible de la sélectivité du vitrage, au sens précédemment décrit. Dans le cas d'une telle réalisation d'un vitrage à haute réflectivité, la présente invention permet de fournir des vitrages présentant un tel effet miroir, c'est-à-dire une forte réflexion extérieure, au sens précédemment décrit, ainsi que le maintien de propriétés antisolaires et la préservation d'une sélectivité relativement élevée, au sens précédemment décrit, c'est-à-dire un rapport T_{L}/g optimisé, notamment de l'ordre de 1 ou légèrement inférieur à 1, et en tout état de cause sensiblement améliorée par rapport aux vitrages proposés dans la demande WO01/21540 précédemment cité.

En particulier, la société déposante a découvert que de tels objectifs pouvaient être atteints par l'utilisation sur des substrats verriers d'empilements de couches dont toutes les couches fonctionnelles, c'est-à-dire toutes les couches de l'empilement réfléchissant/absorbant l'essentiel du rayonnement infrarouge solaire, sont des couches en oxynitrure de titane. Tout particulièrement, selon l'invention, il a été trouvé de très bonnes valeurs d'émissivité,de sélectivité, et de colorimétrie, au sens précédemment décrit, pouvaient être obtenues dans de tels empilements grâce à l'action de telles couches, pour des taux d'oxygène et d'azote contrôlés et tels que décrits par la suite. En particulier, alors que l'oxygène est considéré dans la technique comme une impureté nuisant fortement aux propriétés énergétiques des couches fonctionnelles du type nitrure, il a été trouvé que de très bonnes sélectivités et même de faibles émissivités pouvaient être obtenues pour des composés comprenant des proportions très précises des éléments Ti, O, et N, tout en contrôlant la colorimétrie de tels vitrages, notamment leur aspect extérieur.

Plus précisément, la présente invention se rapporte à un article verrier à fonction antisolaire comprenant au moins un substrat verrier et un empilement de couches déposé sur au moins une face dudit substrat, ledit empilement de couches comprenant au moins une couche d'oxynitrure de titane de formule générale TiNₓO_{y}, dans laquelle 1,00 < x < 1,20 et dans laquelle 0,01 < y < 0,10, ledit empilement de couches étant constitué, outre la ou lesdites couches d'oxynitrure de titane, de couches de matériaux diélectriques et éventuellement de couches métalliques à base de chrome, de nickel, de titane, de niobium ou d'un mélange d'au moins deux de ces éléments ou de couches du nitrure de tels métaux.

Par matériau diélectrique, on entend tout matériau dont la forme massive et dénuée d'impuretés a une résistivité initialement supérieure à 10¹⁰ ohms-mètres (**Ω**.m). De tels matériaux, une fois déposés en couches minces, peuvent cependant comprendre des éléments supplémentaires augmentant sensiblement leur conductivité électrique, utiles notamment pour améliorer le rendement de pulvérisation cathodique du matériau précurseur constituant la cible magnétron. Par exemple, des couches de nitrure de silicium utilisées dans l'empilement selon l'invention peuvent comprendre une faible quantité d'aluminium, la cible de silicium métallique classiquement utilisée lors de la pulvérisation cathodique comprenant par exemple en général de 6 à 10% poids d'aluminium, pour en augmenter la conductivité.

Selon des modes préférés de réalisation de la présente invention, qui peuvent éventuellement être combinés entre eux :
- Dans l'article verrier, 0,02 < y < 0,08.
- Dans l'article verrier, 1,05 < x < 1,20.
- L'épaisseur de la ou les couche(s) d'oxynitrure de titane est comprise entre 10 et 80 nanomètres, en particulier entre 10 et 60 nanomètres, et tout particulièrement entre 15 et 50 nanomètres.
- L'empilement incorpore en outre, en dessous et/ou au-dessus de la couche d'oxynitrure de titane, une ou plusieurs couches de matériaux diélectriques.
- Le ou les matériaux diélectriques sont choisies parmi le nitrure de Silicium éventuellement dopé par Al, Zr, B, le nitrure d'aluminium, l'oxyde d'étain, un oxyde mixte de zinc ou d'étain Sn_{y}Zn_{z}Oₓ, l'oxyde de silicium, l'oxyde de titane, les oxynitrures de silicium SiOₓN_{y}. De préférence, le matériau diélectrique est le nitrure de Silicium éventuellement dopé par Al, Zr, B.
- L'empilement incorpore en outre, en dessous, et/ou éventuellement au-dessus, de la couche d'oxynitrure de titane, une couche d'un métal, éventuellement partiellement ou totalement oxydée et/ou nitrurée, ledit métal étant à base de chrome, de nickel, de titane, de niobium ou d'un mélange d'au moins deux de ces éléments, ladite couche ayant par exemple une épaisseur inférieure à 10 nm, notamment inférieure à 5 nm, notamment d'épaisseur inférieure à 3 nm. Le métal est choisi parmi Ti, Nb ou un alliage de nickel et de chrome, ledit métal ou alliage étant éventuellement nitruré. Tout particulièrement préféré, le métal est un alliage de nickel et de chrome, éventuellement et de préférence encore nitruré.
- L'empilement comprend ou est constitué par la succession des couches suivantes, à partir de la surface du substrat verrier :
   - une couche à base de nitrure de silicium, d'épaisseur de préférence comprise entre 20 et 80 nm, de préférence entre 25 et 70 nm,
   - éventuellement une couche d'un métal, éventuellement partiellement ou totalement oxydée et/ou nitrurée, ledit métal étant à base de chrome, de nickel, de titane, de niobium ou d'un mélange d'au moins deux de ces éléments, ladite couche ayant par exemple une épaisseur inférieure à 10 nm, ou même inférieure à 5 nm, voire inférieure à 3 nm,
   - ladite couche d'oxynitrure de titane de formule générale TiNₓO_{y}, d'épaisseur comprise entre 10 et 80 nm, de préférence entre 15 et 60 nanomètres, et de préférence encore entre 15 et 50 nanomètres,
   - éventuellement une couche d'un métal, éventuellement partiellement ou totalement oxydée et/ou nitrurée, ledit métal étant à base de chrome, de nickel, de titane, de niobium ou d'un mélange d'au moins deux de ces éléments, ladite couche ayant par exemple une épaisseur inférieure à 10 nm, ou même inférieure à 6 nm, voire inférieure à 5 nm ou même inférieure à 3 nm,
   - une couche à base de nitrure de silicium, d'épaisseur comprise entre 20 et 80 nm, de préférence entre 25 et 70 nm,
   - éventuellement une couche supérieure à base d'un oxyde de titane, d'un oxyde de zirconium ou d'un oxyde de titane et de zirconium, voire à base d'un oxyde de silicium.
- L'empilement comprend ou est constitué par la succession des couches suivantes, à partir de la surface du substrat verrier:
   - une couche à base de nitrure de silicium, d'épaisseur comprise entre 20 et 80 nm, de préférence entre 25 et 70 nm,
   - une première couche d'oxynitrure de titane de formule générale TiNₓO_{y}, dans laquelle 1,00 < x < 1,20 et dans laquelle 0,01 < y < 0,10, d'épaisseur comprise entre 10 et 80 nm, de préférence entre 20 et 60 nanomètres, et de préférence encore entre 30 et 50 nanomètres,
   - une couche à base de nitrure de silicium, d'épaisseur comprise entre 20 et 80 nm, de préférence entre 25 et 70 nm,
   - une deuxième couche d'oxynitrure de titane de formule générale TiNₓO_{y}, dans laquelle 1,00 < x < 1,20 et dans laquelle 0,01 < y < 0,10, d'épaisseur comprise entre 10 et 80 nm, de préférence entre 20 et 60 nanomètres, et de préférence encore entre 30 et 50 nanomètres,
   - une couche à base de nitrure de silicium, d'épaisseur comprise entre 20 et 80 nm, de préférence entre 25 et 70 nm,
   - éventuellement une couche supérieure à base d'un oxyde de titane, d'un oxyde de zirconium ou d'un oxyde de titane et de zirconium.
   - Ledit article est un vitrage ne comprenant qu'un seul substrat verrier.
   - Ledit article a subi un traitement thermique tel qu'une trempe, un bombage ou encore un recuit, notamment effectué par un laser.
   - Ledit article est un vitrage feuilleté constitué par un ensemble d'au moins deux substrats verriers liés entre eux par un feuillet thermoplastique, notamment de polyvinyl butyral (PVB).

Selon un mode de réalisation particulier de l'invention, l'article verrier à fonction antisolaire comprend au moins un substrat verrier et un empilement de couches déposées sur au moins une face dudit substrat, et ledit empilement de couches comprend au moins :
- une première couche d'oxynitrure de titane de formule générale TiNₓO_{y}, dans laquelle 1,00 < x < 1,20 et dans laquelle 0,01 < y < 0,10, l'épaisseur de ladite première couche d'oxynitrure de titane étant comprise entre 10 et 80 nanomètres,
- une seconde couche métallique à base de chrome, de nickel, de titane, de niobium ou d'un mélange d'au moins deux de ces éléments, ladite seconde couche étant éventuellement nitrurée,
ladite seconde couche étant disposée entre la première couche d'oxynitrure de titane et ladite face dudit substrat ou au-dessus de la première couche d'oxynitrure de titane dans l'empilement.

Avantageusement, selon ce mode, l'empilement est constitué desdites au moins première et seconde couches et de couches de matériaux diélectriques et de préférence la seconde couche est disposée entre la première couche d'oxynitrure de titane et ladite face dudit substrat. L'épaisseur de ladite première couche d'oxynitrure de titane est notamment comprise 10 et 30 nanomètres, et tout particulièrement entre 10 et 25 nanomètres. L'épaisseur de ladite seconde couche métallique éventuellement nitrurée est avantageusement comprise entre 3 et 15 nm, en particulier est comprise entre 5 et 10 nanomètres. Selon une réalisation privilégiée de ce mode, l'épaisseur de ladite première couche est supérieure à l'épaisseur de ladite seconde couche d'un facteur au moins égal à 1,3, de préférence d'un facteur égal à au moins 1,5 ou même d'un facteur au moins égal à 2, voire au moins égal à 2,5.

Typiquement, la seconde couche métallique est déposée directement sur ladite face dudit substrat. Ladite première et ladite seconde couche sont de préférence en contact l'une avec l'autre. Alternativement, ladite première et ladite seconde couche peuvent être séparées par au moins une couche de matériau diélectrique.

De préférence selon ce mode, 1,05 < x < 1,18.

De préférence selon ce mode, 0,02 < y < 0,08.

Dans un tel article verrier, le ou les matériaux diélectriques sont choisies parmi le nitrure de Silicium éventuellement dopé par Al, Zr, B, le nitrure d'aluminium, l'oxyde d'étain, un oxyde mixte de zinc ou d'étain Sn_{y}Zn_{z}Oₓ, l'oxyde de silicium, l'oxyde de titane, les oxynitrures de silicium SiOₓN_{y}. De préférence, le matériau diélectrique est le nitrure de Silicium éventuellement dopé par Al, Zr, B.

Avantageusement, la seconde couche est une couche de nickel et de chrome, préférentiellement nitrurée.

Selon un mode préférentiel, ledit empilement est constitué d'une succession desdites première et seconde couches et éventuellement des couches de matériaux diélectriques séparant lesdites première et seconde couches.

Notamment, l'invention concerne un article verrier tel que décrit précédemment, dans lequel l'empilement comprend ou est constitué par la succession des couches suivantes, à partir de la surface du substrat verrier :
- au moins ladite seconde couche métallique à base de chrome, de nickel, de titane, de niobium ou d'un mélange d'au moins deux de ces éléments, ladite couche étant éventuellement nitrurée, ladite couche étant de préférence une couche de nickel et de chrome, préférentiellement nitrurée, ladite couche ayant de préférence une épaisseur comprise entre 3 et 15 nanomètres, de préférence entre 5 et 10 nanomètres, ladite couche étant de préférence une couche de nickel et de chrome, préférentiellement nitrurée,
- éventuellement une ou plusieurs couches inférieures de matériaux diélectriques, notamment à base de nitrure de silicium, d'épaisseur, au total, comprise entre 10 et 120 nm,
- ladite première couche d'oxynitrure de titane de formule générale TiNₓO_{y}, dans laquelle 0,01 < y < 0,10, de préférence 0,02 < y < 0,08, et dans laquelle 1,00 < x < 1,20, de préférence 1,05 < x < 1,18, d'épaisseur comprise entre 10 et 80 nm, de préférence entre 10 et 30 nanomètres, et de préférence encore entre 10 et 25 nanomètres,
- éventuellement au moins une couche métallique à base de chrome, de nickel, de titane, de niobium ou d'un mélange d'au moins deux de ces éléments, ladite couche étant éventuellement nitrurée, ladite couche ayant par exemple une épaisseur inférieure à 10 nm, ou même inférieure à 5 nm, voire inférieure à 3 nm, ladite couche étant de préférence une couche de nickel et de chrome, préférentiellement nitrurée,
- une ou plusieurs couches supérieures de matériaux diélectriques, notamment à base de nitrure de silicium, d'épaisseur physique, au total, comprise entre 10 et 100 nm,
- éventuellement une couche supérieure à base d'un oxyde de titane, d'un oxyde de zirconium ou d'un oxyde de titane et de zirconium ou encore à base d'oxyde de silicium.

Selon un premier aspect du mode décrit précédemment, l'invention concerne un article verrier tel que décrit précédemment, dans lequel l'empilement comprend ou est constitué par la succession des couches suivantes, à partir de la surface du substrat verrier:
- une couche métallique à base de chrome, de nickel, de titane, de niobium ou d'un mélange d'au moins deux de ces éléments, ladite couche étant éventuellement nitrurée, ladite couche ayant une épaisseur comprise entre 3 et 15 nanomètres, de préférence entre 5 et 10 nanomètres, ladite couche étant de préférence une couche de nickel et de chrome, préférentiellement nitrurée,
- une couche d'oxynitrure de titane de formule générale TiNₓO_{y}, dans laquelle 0,01 < y < 0,10, de préférence 0,02 < y < 0,08 et dans laquelle 1,00 < x < 1,20, de préférence 1,05 < x < 1,18, d'épaisseur comprise entre 10 et 80 nm, de préférence entre 10 et 30 nanomètres, et de préférence encore entre 10 et 25 nanomètres,
- une couche à base de nitrure de silicium, d'épaisseur comprise entre 20 et 80 nm, de préférence entre 25 et 70 nm,
- éventuellement une couche supérieure à base d'un oxyde de titane, d'un oxyde de zirconium ou d'un oxyde de titane et de zirconium.

Selon un second aspect alternatif du mode décrit précédemment, l'invention concerne un article verrier dans lequel l'empilement comprend ou est constitué par la succession des couches suivantes, à partir de la surface du substrat verrier:
- une couche métallique à base de chrome, de nickel, de titane, de niobium ou d'un mélange d'au moins deux de ces éléments, ladite couche étant éventuellement nitrurée, ladite couche ayant une épaisseur comprise entre 3 et 15 nanomètres, de préférence entre 5 et 10 nanomètres, ladite couche étant de préférence une couche de nickel et de chrome, préférentiellement nitrurée,
- une couche à base de nitrure de silicium, d'épaisseur comprise entre 50 et 120 nm, de préférence entre 70 et 100 nm,
- une couche d'oxynitrure de titane de formule générale TiNₓO_{y}, dans laquelle 0,01 < y < 0,10, de préférence 0,02 < y < 0,08 et dans laquelle 1,00 < x < 1,20, de préférence 1,05 < x < 1,18, d'épaisseur comprise entre 10 et 80 nm, de préférence entre 10 et 50 nanomètres, et de préférence encore entre 10 et 30 nanomètres,
- une couche à base de nitrure de silicium, d'épaisseur comprise entre 20 et 80 nm, de préférence entre 30 et 60 nm,
- éventuellement une couche supérieure à base d'un oxyde de titane, d'un oxyde de zirconium ou d'un oxyde de titane et de zirconium.

Ledit article tel que décrit précédemment peut être un vitrage ne comprenant qu'un seul substrat verrier, ledit empilement étant disposé sur au moins une face dudit vitrage. **Un tel** article peut avoir subi un traitement thermique tel qu'une trempe, un bombage ou encore un recuit.

Alternativement, ledit article est un vitrage feuilleté constitué par un ensemble d'au moins deux substrats verriers liés entre eux par un feuillet thermoplastique, notamment de polyvinyl butyral (PVB), ledit empilement étant disposé de préférence sur au moins une face d'un des substrats verriers tournés vers l'intérieur dudit vitrage feuilleté.

L'article verrier selon l'invention peut être un vitrage feuilleté, un double vitrage (constitué de deux panneaux de verre séparés par une lame de gaz) ou encore un ensemble d'un vitrage composite constitué d'un vitrage feuilleté tel que décrit précédemment compris dans une structure du type double vitrage.

Les exemples qui suivent sont donnés à titre purement illustratifs et ne limitent sous aucun des aspects décrits la portée de la présente invention. A des fins de comparaison, tous les empilements des exemples qui suivent sont synthétisés sur des substrats verriers montés en simple vitrage.

Toutes les couches des empilements ont été déposées selon les techniques classiques de dépôts sous vide par pulvérisation magnétron.

Selon une première série d'expérience (exemple 1 à 5 qui suivent), on démontre la possibilité selon l'invention d'obtenir des vitrages présentant une transmission lumineuse élevée (proche de 50%) tout en préservant une forte sélectivité et de bonnes propriétés antisolaires.

### Exemple 1 (selon l'invention):

Dans cet exemple selon l'invention, on a déposé, selon les techniques magnétrons classiques, sur un substrat en verre du type Planilux^{®}, un empilement constitué par la séquence de couches suivantes :

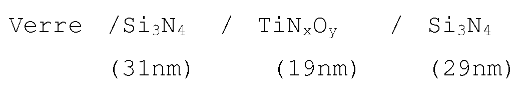

La couche TiNₓO_{y} est obtenue par la technique de pulvérisation magnétron à partir d'une cible de titane métallique dans une atmosphère très essentiellement d'azote et d'argon, mais contenant une quantité d'oxygène de l'ordre de 2% en volume.

Les couches de nitrure de silicium sont déposées selon les techniques classiques dans le domaine, à partir d'une cible de silicium comprenant 8% en poids d'aluminium dans une atmosphère d'azote et d'argon.

Dans le tableau qui suit, on a reporté les principales caractéristiques du procédé de dépôt :

| Vitesse de la ligne (m/min) | | 1,7 |
|---|---|---|
| Si₃N₄ | Puissance sur cathode (kW) | 64 |
| | Pression(µbar) | 4 |
| | Flux Ar (sccm) | 700 |
| | Flux N₂ (sccm) | 850 |
| TiNₓO_{y} | Puissance (kW) | 87 |
| | Pression (µbar) | 6 |
| | Flux Ar (sccm) | 1600 |
| | Flux N₂ + O₂ (sccm) | 500 |
| Si₃N₄ | Puissance (kW) | 78 |
| | Pression (µbar) | 4 |
| | Flux Ar (sccm) | 700 |
| | Flux N₂ (sccm) | 850 |

Selon l'invention, le vitrage ainsi obtenu est utilisé comme vitrage simple ou comme premier substrat pour l'obtention d'un vitrage feuilleté par feuilletage avec un autre substrat en verre du type Planilux^{®} au moyen d'une feuille de PVB, l'empilement étant disposé entre les deux substrats verriers dans le vitrage final.

Sur le vitrage simple et le vitrage feuilleté ainsi obtenus, on a mesuré les facteurs T_{L} et g afin d'en déterminer la sélectivité. Les résultats sont reportés dans le tableau 1. On a également mesuré leurs propriétés colorimétriques ci-après. Les résultats sont reportés dans le tableau 3 ci-après.

### Exemple 2 (comparatif):

Dans cet exemple, on a pratiqué de façon identique à l'exemple 1 et obtenu un empilement sensiblement identique, à l'exception que le débit d'azote dans la chambre de pulvérisation a été augmenté à 800 sccm, de manière à augmenter la valeur de x.

Comme pour l'exemple 1, le vitrage ainsi obtenu est utilisé comme vitrage simple ou comme premier substrat pour l'obtention d'un vitrage feuilleté par feuilletage avec un autre substrat en verre du type Planilux^{®} au moyen d'une feuille de PVB, l'empilement étant disposé entre les deux substrats verriers dans le vitrage final.

Sur le vitrage simple et le vitrage feuilleté ainsi obtenus, on a mesuré les facteurs T_{L} et g afin d'en déterminer la sélectivité. Les résultats sont reportés dans le tableau 1.

### Exemple 3 (selon l'invention):

Dans cet exemple selon l'invention, on a déposé, selon les techniques magnétrons classiques, sur un substrat en verre du type Planilux^{®}, un empilement constitué par la séquence de couches suivantes:

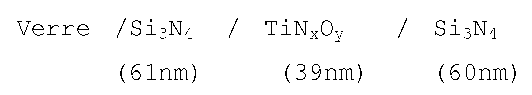

La couche TiNₓO_{y} est obtenue par pulvérisation magnétron à partir d'une cible de titane métallique dans une atmosphère très essentiellement d'azote et d'argon, mais contenant une quantité d'oxygène, de l'ordre de 2% en volume.

Dans le tableau qui suit, on a reporté les principales caractéristiques du procédé de dépôt :

| Vitesse de la ligne (m/min) | | 0,9 |
|---|---|---|
| Si₃N₄ | Puissance sur cathode (kW) | 80 |
| | Pression(µbar) | 4 |
| | Flux Ar (sccm) | 700 |
| | Flux N₂ (sccm) | 850 |
| TiNₓO_{y} | Puissance (kW) | 97 |
| | Pression (µbar) | 6 |
| | Flux Ar (sccm) | 1600 |
| | Flux N₂ + O₂ (sccm) | 500 |
| Si₃N₄ | Puissance (kW) | 70 |
| | Pression (µbar) | 4 |
| | Flux Ar (sccm) | 700 |
| | Flux N₂ (sccm) | 850 |

Comme pour l'exemple 1, le vitrage ainsi obtenu est utilisé comme vitrage simple ou comme premier substrat pour l'obtention d'un vitrage feuilleté par feuilletage avec un autre substrat en verre du type Planilux^{®} au moyen d'une feuille de PVB, l'empilement étant disposé entre les deux substrats verriers dans le vitrage final.

Sur le vitrage simple et le vitrage feuilleté ainsi obtenus, on a mesuré les facteurs T_{L} et g afin d'en déterminer la sélectivité. Les résultats sont reportés dans le tableau 2. On a également mesuré leurs propriétés colorimétriques ci-après. Les résultats sont reportés dans le tableau 3 ci-après.

### Exemple 4 (comparatif) :

Dans cet exemple, on a pratiqué de façon identique à l'exemple 3 et obtenu un empilement sensiblement identique, à l'exception qu'on a introduit dans la chambre de pulvérisation une quantité d'oxygène supérieure, de l'ordre de 5% en volume dans l'atmosphère essentiellement d'azote et d'argon.

Comme pour les exemples précédents, le vitrage ainsi obtenu est utilisé comme vitrage simple (S) ou comme premier substrat pour l'obtention d'un vitrage feuilleté (F) par feuilletage avec un autre substrat en verre du type Planilux^{®} au moyen d'une feuille de PVB, l'empilement étant disposé entre les deux substrats verriers dans le vitrage final.

Sur le vitrage simple et le vitrage feuilleté ainsi obtenus, on a mesuré les facteurs T_{L} et g afin d'en déterminer la sélectivité. Les résultats sont reportés dans le tableau 2.

### Exemple 5 (comparatif) :

Dans cet exemple, on a utilisé un vitrage de la société déposante commercialisé sous la référence Cool-Lite ST120 dont l'empilement comprend une couche de nitrure de niobium comme couche réfléchissante/absorbante du rayonnement solaire, entourée par deux couches de nitrure de silicium.

Sur ces vitrages, on a mesuré dans les mêmes conditions que précédemment les facteurs T_{L} et g afin d'en déterminer la sélectivité. Les résultats sont reportés dans le tableau 2.

Comme pour l'exemple 1, le vitrage ainsi obtenu est utilisé comme vitrage simple (S) ou comme premier substrat pour l'obtention d'un vitrage feuilleté (F) par feuilletage avec un autre substrat en verre du type Planilux^{®} au moyen d'une feuille de PVB, l'empilement étant disposé entre les deux substrats verriers dans le vitrage final.

Sur le vitrage simple et le vitrage feuilleté ainsi obtenus, on a mesuré les facteurs T_{L} et g afin d'en déterminer la sélectivité. Les résultats sont reportés dans le tableau 2.

Les valeurs de x et y dans les couches d'oxynitrure de titane sont mesurées classiquement par des techniques de XPS (spectrométrie de photoélectrons induits par rayons X) sur un appareil Nova-Kratos selon les conditions suivantes :

### CONDITIONS D'ANALYSES :

Source : Al K**α** monochromatisée
300 Watts pour les spectres particuliers
Aire analysée : 110x110 **µ**m² (mode **µ**spot)
Angle de détection : normal **(θ = 0°)**
Profondeur analysée inférieure à 10 nm en détection normale

### CONDITIONS D'ABRASION :

Ions : Ar - 2.0 keV
Balayage : 3 × 3 mm² centré sur la zone d'analyse
Cycles d'abrasion/temps par cycle : 30 cycles de 1 minute.

Les caractéristiques des différents vitrages obtenus pour les exemples 1 et 2, mesurées selon les normes précisées précédemment, sont reportées dans le tableau 1 qui suit :

**Tableau 1**

| | Exemple 1 | | Exemple 2 | |
|---|---|---|---|---|
| Type vitrage | S* | F* | S* | F* |
| Couche fonctionnelle | TiNₓO_{y} | | TiNₓO_{y} | |
| x | 1, 16 | 1, 16 | 1,20 | 1,20 |
| y | 0,03 | 0,03 | 0,03 | 0,03 |
| T_{L} (%) | 49,1 | 49,7 | 46,7 | 48,6 |
| g (%) | 45,8 | 44,9 | 45,4 | 45,6 |
| Sélectivité (TL/g) | 1,07 | 1,11 | 1,03 | 1,07 |
| Emissivité (%) | 45 | N. A. | 45 | N. A. |

| | | | | |
|---|---|---|---|---|
| * S : vitrage simple - F : vitrage feuilleté * N.A : non applicable | | | | |

**Tableau 2**

| | Exemple 3 | | Exemple 4 | | Exemple 5 | |
|---|---|---|---|---|---|---|
| Type vitrage | S* | F* | S* | F* | S* | F* |
| Couche fonctionnelle | TiNₓO_{y} | | TiNₓO_{y} | | NbN | |
| x | 1, 16 | 1, 16 | 1, 16 | 1, 16 | N. A. | N. A. |
| y | 0,03 | 0,03 | 0, 1 | 0,1 | N. A. | N. A. |
| T_{L} (%) | 32,1 | 28,9 | 37,8 | 34,3 | 21,0 | 21,0 |
| g (%) | 29, 8 | 30,9 | 34,7 | 34,7 | 30,0 | 29,5 |
| Sélectivité (TL/g) | 1,08 | 0,93 | 1,09 | 0,95 | 0, 70 | 0, 71 |
| Emissivité (%) | 26 | N. A. | 40 | N. A. | 64 | N. A. |

| | | | | | | |
|---|---|---|---|---|---|---|
| * S : vitrage simple - F : vitrage feuilleté * N.A : non applicable | | | | | | |

La comparaison des données reportées dans les tableaux 1 et 2 montre qu'une plus grande sélectivité est obtenue lorsque l'empilement en cause comprend une couche fonctionnelle dont le taux d'azote x est conforme à l'invention, comme le montre la comparaison des exemples 1 et 2, tandis que la meilleure émissivité, c'est-à-dire la plus basse, est obtenue pour des taux d'oxygène plus faibles, comme le montre la comparaison des exemples 3 et 4. La présente invention permet l'optimisation de ces deux paramètres, forte sélectivité et basse émissivité. En particulier, la société déposante a pu montrer, au travers des exemples reportés dans la présente demande, que dans de telles couches d'oxynitrure de titane le contrôle très précis de la composition de ladite couche, en particulier des valeurs de x et de y, permettait d'optimiser à la fois la sélectivité et l'émissivité du vitrage.

Les caractéristiques colorimétriques du vitrage selon l'exemple 1 et selon l'exemple 3, dans le système international (CIE L*b*a*), ont été également mesurés en transmission et en réflexion externe (coté extérieur).

On a également soumis le substrat muni de son empilement à un traitement thermique consistant en un chauffage à 650°C pendant quelques minutes suivi d'une trempe. Ce traitement est représentatif des conditions subies par le vitrage si celui-ci doit être trempé ou encore bombé.

Toutes les données optiques sont reportées dans le tableau 3 qui suit :

**Tableau 3**

| | | Transmission lumineuse | | | | | Réflexion extérieure | | |
|---|---|---|---|---|---|---|---|---|---|
| | | T_{L} | g | T_{L}/g | a*_{T} | b*_{T} | R_{Lext} | a*_{Rext} | b*_{Rext} |
| Example 1 | Vitrage simple | 49,1 | 45,8 | 1,07 | -2,2 | -2,8 | 10,9 | -2,2 | -9,5 |
| | Vitrage simple trempé | 55,2 | 48,3 | 1,14 | -2,4 | 0,9 | 12,9 | -3,8 | -13,2 |
| | Vitrage feuilleté | 49,7 | 44,9 | 1,11 | -3,4 | -2 | 10,9 | 0,9 | -0,1 |
| Example 3 | Vitrage simple | 32,1 | 29,8 | 1,08 | -2,9 | 8,8 | 21,3 | -2,2 | 7, 0 |
| | Vitrage simple trempé | 40,4 | 33,2 | 1,2 | -4,6 | 9, 1 | 19, 7 | 4, 0 | -0,6 |
| | Vitrage feuilleté | 28, 9 | 30,9 | 0,93 | -4,5 | 2,8 | 17, 4 | 1,1 | 3,3 |

Les données reportées dans le tableau 3 montrent les propriétés idéales de colorimétrie en transmission et en réflexion extérieure des vitrages munis des empilements selon l'invention :
- En transmission les paramètres a*_{T} et b*_{T} restent relativement faible, assurant une couleur relativement neutre en transmission.
- En réflexion, le paramètre a*ₑₓₜ selon les vitrages selon l'invention, est relativement faible et souvent négatif, tandis que le paramètre b* est proche de 0 pour les vitrages feuilletés (couleur neutre en réflexion) soit fortement négatif pour le vitrage simple selon l'exemple 1, ce qui assure une couleur bleue du vitrage telle que recherchée en vision extérieure.

De telles propriétés colorimétriques entraînent donc une couleur neutre ou bleue-verte des vitrages en transmission mais surtout en réflexion extérieure, telle qu'actuellement recherchée dans le domaine du bâtiment.

Selon un autre avantage, les empilements antisolaires selon la présente invention, dont la ou les couches actives sont à base d'un oxynitrure de titane sont extrêmement simples à fabriquer, notamment par la technique du dépôt sous vide par pulvérisation cathodique dite magnétron.

En outre, des tests de durabilité complémentaires ont montré que de telles couches pouvaient être sans difficulté déposées en face 2 d'un vitrage simple, sans risque de dégradation de celle-ci, par action chimique (humidité) ou par action mécanique (abrasion de l'empilement).

### Exemple 6 (selon l'invention):

Dans cet exemple selon l'invention, on cherche à obtenir un article verrier selon l'invention présentant une forte réflexion lumineuse extérieure tout en préservant une bonne sélectivité, ainsi qu'une colorimétrie neutre en réflexion extérieure telle que recherchée dans le domaine du bâtiment.

Pour cela, on dépose, selon les techniques magnétrons classiques, sur un substrat en verre du type Planilux^{®}, un empilement constitué par la séquence de couches suivantes:

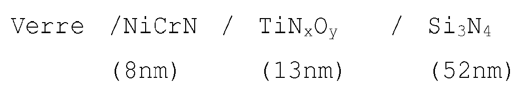

La couche TiNₓO_{y} est obtenue par la technique de pulvérisation magnétron à partir d'une cible de titane métallique dans une atmosphère essentiellement d'azote et d'argon mais contenant une quantité d'oxygène de l'ordre de 2% en volume. Des valeurs de x = 1,18 et y = 0,07 dans la couche d'oxynitrure de titane TiNₓO_{y} sont mesurées classiquement par les techniques de XPS décrites précédemment.

Les couches de nitrure de silicium sont déposées selon les techniques classiques dans le domaine, à partir d'une cible de silicium comprenant 8% en poids d'aluminium dans une atmosphère d'azote et d'argon.

La couche de NiCrN est déposée à partir de la pulvérisation d'une cible de NiCr dans une atmosphère d'argon et d'azote, les éléments Ni et Cr étant présents dans la cible selon les proportions suivantes : 80% poids de Ni et 20% poids de Cr.

Dans le tableau qui suit, on a reporté les principales caractéristiques du procédé de dépôt :

| Vitesse de la ligne(m/min) | | 2 |
|---|---|---|
| NiCrN | Puissance sur cathode (kW) | 19 |
| | Pression(µbar) | 3,5 |
| | Flux Ar (sccm) | 1150 |
| | Flux N₂ (sccm) | 600 |
| TiNₓO_{y} | Puissance (kW) | 92 |
| | Pression (µbar) | 6 |
| | Flux Ar (sccm) | 1600 |
| | Flux N₂ + O₂ (sccm) | 500 |
| Si₃N₄ | Puissance (kW) | 150 |
| | Pression (µbar) | 4 |
| | Flux Ar (sccm) | 700 |
| | Flux N₂ (sccm) | 850 |

Selon l'invention, le vitrage ainsi obtenu peut être utilisé comme vitrage simple ou comme premier substrat pour l'obtention d'un vitrage feuilleté par feuilletage avec un autre substrat en verre du type Planilux^{®} au moyen d'une feuille de PVB, l'empilement étant disposé entre les deux substrats verriers dans le vitrage final.

Sur le vitrage simple et le vitrage feuilleté ainsi obtenus, on a mesuré les facteurs T_{L} et g afin d'en déterminer la sélectivité et leurs propriétés colorimétriques. Les résultats sont reportés dans les tableaux qui suivent.

### Exemple 7 (selon l'invention):

Dans cet exemple selon l'invention, on a déposé, selon les techniques magnétrons classiques, sur un substrat en verre du type Planilux^{®}, un autre empilement constitué par la séquence de couches suivantes:

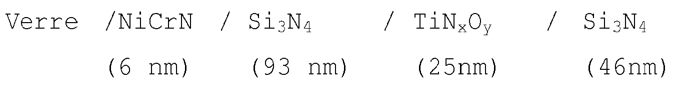

Les couches de TiNₓO_{y}, NiCrN et Si₃N₄ sont obtenues selon les mêmes principes que précédemment exposés.

Des valeurs de x = 1,13 et y = 0,07 dans la couche d'oxynitrure de titane TiNₓO_{y} sont mesurées classiquement par les techniques de XPS décrites précédemment.

Dans le tableau qui suit, on a reporté les principales caractéristiques du procédé de dépôt :

| Vitesse de la ligne(m/min) | | 1,3 |
|---|---|---|
| NiCrN | Puissance sur cathode (kW) | 12,5 |
| | Pression(µbar) | 3,5 |
| | Flux Ar (sccm) | 1150 |
| | Flux N₂ (sccm) | 600 |
| Si₃N₄ | Puissance sur cathodes (kW) | 150 |
| | Pression(µbar) | 4 |
| | Flux Ar (sccm) | 700 |
| | Flux N₂ (sccm) | 850 |
| TiNₓO_{y} | Puissance sur cathode (kW) | 80 |
| | Pression(µbar) | 6 |
| | Flux Ar (sccm) | 1600 |
| | Flux N₂ + O₂ (sccm) | 500 |
| Si₃N₄ | Puissance sur cathodes (kW) | 90 |
| | Pression(µbar) | 4 |
| | Flux Ar (sccm) | 700 |
| | Flux N₂ (sccm) | 850 |

De même que pour l'exemple précédent, le vitrage ainsi obtenu est utilisé comme vitrage simple ou comme premier substrat pour l'obtention d'un vitrage feuilleté par feuilletage avec un autre substrat en verre du type Planilux^{®} au moyen d'une feuille de PVB, l'empilement étant disposé entre les deux substrats verriers dans le vitrage final.

Sur le vitrage simple et le vitrage feuilleté ainsi obtenus, on a mesuré les facteurs T_{L} et g afin d'en déterminer la sélectivité et leurs propriétés colorimétriques. Les résultats sont reportés dans les tableaux qui suivent.

### Exemple 8 (comparatif) :

Dans cet exemple, on a utilisé un vitrage de la société déposante commercialisé sous la référence Cool-Lite STB120 dont l'empilement comprend une couche de nitrure de niobium comme couche réfléchissante/absorbante du rayonnement solaire, entourée par deux couches de nitrure de silicium.

Sur le vitrage simple et le vitrage feuilleté ainsi obtenus, on a mesuré les facteurs T_{L} et g afin d'en déterminer la sélectivité et leurs propriétés colorimétriques. Les résultats sont reportés dans les tableaux qui suivent.

Les caractéristiques de sélectivité des différents vitrages obtenus, mesurées selon les normes précisées, sont reportées dans le tableau 4 qui suit :

**Tableau 4**

| | | Exemple 6 | Exemple 7 | Exemple 8 |
|---|---|---|---|---|
| R_{Lext} | Vitrage simple | 31 | 21 | 21 |
| | Vitrage feuilleté | 31 | 21 | 21 |
| T_{L} (%) | Vitrage simple | 33 | 27 | 22 |
| | Vitrage feuilleté | 31 | 26 | 22 |
| g (%) | Vitrage simple | 33 | 31 | 32 |
| | Vitrage feuilleté | 33 | 32 | 33 |
| Sélectivité (T_{L}/g) | Vitrage simple | 1,00 | 0,88 | 0,66 |
| | Vitrage feuilleté | 0, 94 | 0, 80 | 0,67 |

La comparaison des données reportées dans le tableau 4 montre qu'une plus grande sélectivité est obtenue pour un empilement comprenant les deux couches conformes à la présente invention, c'est-à-dire pour l'empilement des exemples 6 et 7, et même égale à 1 pour l'empilement selon l'exemple 6, malgré la présence de la couche fortement réfléchissante en NiCrN.

Les caractéristiques colorimétriques du vitrage selon les exemples 6 à 8, ont été également mesurés dans le système international (CIE L*b*a*) en transmission et en réflexion externe (coté extérieur).
Toutes les données optiques sont reportées dans le tableau 5 qui suit :

**Tableau 5**

| Exemple | | TRANSMISSION LUMINEUSE | | | REFLEXION EXTERIEURE | | |
|---|---|---|---|---|---|---|---|
| | | T_{L} | a*_{T} | b*_{T} | R_{Lext} | a*_{Rext} | b*_{Rext} |
| Exemple 6 | Vitrage simple | 33 | -2,5 | 2,5 | 31 | -2,5 | -1,0 |
| | Vitrage feuilleté | 31 | -2,7 | 2,7 | 31 | -2,5 | -0,8 |
| Exemple 7 | Vitrage simple | 27 | -4.0 | 0.0 | 21 | -4,0 | -18,0 |
| | Vitrage feuilleté | 26 | -3,6 | -2,5 | 21 | -0,5 | -18,0 |
| Exemple 8 | Vitrage simple | 22 | -1,4 | 0,5 | 21 | -2,9 | -16 |
| | Vitrage feuilleté | 22 | -1,4 | 2,7 | 21 | -3,6 | -10,8 |

Les données reportées dans le tableau 5 montrent les propriétés idéales de colorimétrie en transmission et en réflexion extérieure des vitrages munis des empilements selon l'invention :
- En transmission les paramètres a*_{T} et b*_{T} sont le plus souvent négatif et restent relativement faibles, assurant une couleur relativement neutre en transmission.
- En réflexion, le paramètre a*_{Rext} selon les vitrages selon l'invention, est toujours relativement faible et le plus souvent négatif, tandis que le paramètre b*_{Rext} est soit proche de 0 pour l'exemple 6, ce qui assure une couleur neutre en réflexion, soit fortement négatif (exemple 7), ce qui assure une couleur bleue en réflexion telle que recherchée dans le domaine du bâtiment.

De telles propriétés colorimétriques entraînent donc une couleur neutre des vitrages en transmission et une couleur neutre (exemple 6) ou bleue (exemple 7) en réflexion extérieure, telle qu'actuellement recherchée dans le domaine du bâtiment.

Selon un autre avantage, les empilements antisolaires selon la présente sont extrêmement simples à fabriquer, notamment par la technique du dépôt sous vide par pulvérisation cathodique dite magnétron.

En outre, des tests de durabilité complémentaires ont montré que de telles couches pouvaient être sans difficulté déposées en face 2 d'un vitrage simple, sans risque de dégradation de celle-ci, par action chimique (humidité) ou par action mécanique (abrasion de l'empilement).

## Revendications

1. Article verrier à fonction antisolaire comprenant au moins un substrat verrier et un empilement de couches déposées sur au moins une face dudit substrat, ledit empilement de couches comprenant une couche d'oxynitrure de titane de formule générale TiNₓO_{y}, dans laquelle 1,00 < x < 1,20 et dans laquelle 0,01 < y < 0,10, ledit empilement de couches étant constitué d'au moins une telle couche d'oxynitrure de titane et de couches de matériaux diélectriques, ainsi qu'éventuellement des couches métalliques à base de chrome, de nickel, de titane, de niobium ou d'un mélange d'au moins deux de ces éléments, lesdites couches métalliques étant éventuellement nitrurées.

2. Article verrier selon l'une des revendications précédentes, dans lequel 0,02 < y < 0,08.

3. Article verrier selon l'une des revendications précédentes, dans lequel 1,05 < x < 1,20.

4. Article verrier selon l'une des revendications précédentes, dans lequel l'épaisseur de ladite couche d'oxynitrure de titane est comprise entre 10 et 80 nanomètres, en particulier entre 10 et 60 nanomètres.

5. Article verrier selon l'une des revendications précédentes, dans lequel l'empilement incorpore en outre, en dessous et/ou au-dessus de la couche d'oxynitrure de titane, une ou plusieurs couches de matériaux diélectriques.

6. Article verrier selon la revendication précédente, dans lequel le ou les matériaux diélectriques sont choisies parmi le nitrure de Silicium éventuellement dopé par Al, Zr, B, le nitrure d'aluminium, l'oxyde d'étain, un oxyde mixte de zinc ou d'étain Sn_{y}Zn_{z}Oₓ, l'oxyde de silicium, l'oxyde de titane, les oxynitrures de silicium SiOₓN_{y}.

7. Article verrier selon l'une des revendications précédentes, dans lequel l'empilement incorpore en outre, en dessous, et/ou éventuellement au-dessus, de la couche d'oxynitrure de titane, une couche d'un métal, éventuellement partiellement ou totalement oxydée et/ou nitrurée, ledit métal étant à base de chrome, de nickel, de titane, de niobium ou d'un mélange d'au moins deux de ces éléments, ladite couche ayant une épaisseur inférieure à 5 nm, de préférence d'épaisseur inférieure à 3 nm.

8. Article verrier selon la revendication précédente, dans lequel le métal est choisi parmi Ti, Nb ou un alliage de nickel et de chrome, ledit métal ou alliage étant éventuellement nitruré.

9. Article verrier selon l'une des revendications précédentes, dans lequel l'empilement comprend ou est constitué par la succession des couches suivantes, à partir de la surface du substrat verrier :
- une couche à base de nitrure de silicium, d'épaisseur comprise entre 20 et 80 nm,
- éventuellement une couche d'un métal, éventuellement partiellement ou totalement oxydée et/ou nitrurée, ledit métal étant à base de chrome, de nickel, de titane, de niobium ou d'un mélange d'au moins deux de ces éléments, ladite couche ayant une épaisseur inférieure à 5 nm de préférence inférieure à 3 nm,
- une couche d'oxynitrure de titane de formule générale TiNₓO_{y}, d'épaisseur comprise entre 10 et 80 nm, de préférence entre 15 et 60 nanomètres, et de préférence encore entre 15 et 50 nanomètres,
- de préférence une couche d'un métal, éventuellement partiellement ou totalement nitrurée, ledit métal étant à base de chrome, de nickel, de titane, de niobium ou d'un mélange d'au moins deux de ces éléments, de préférence encore une couche d'un nitrure de nickel et de chrome, ladite couche ayant une épaisseur inférieure à 6 nm,
- une couche à base de nitrure de silicium, d'épaisseur comprise entre 20 et 80 nm, de préférence entre 25 et 70 nm,
- éventuellement une couche supérieure à base d'un oxyde de titane, d'un oxyde de zirconium ou d'un oxyde de titane et de zirconium ou à base d'un oxyde de silicium.

10. Article verrier selon la revendication 9, dans lequel la première couche à base de nitrure de silicium est d'épaisseur comprise entre 25 et 70 nm.

11. Article verrier selon l'une des revendications précédentes, dans lequel l'empilement comprend ou est constitué par la succession des couches suivantes, à partir de la surface du substrat verrier:
- une couche à base de nitrure de silicium, d'épaisseur comprise entre 20 et 80 nm, de préférence entre 25 et 70 nm,
- une première couche d'oxynitrure de titane de formule générale TiNₓO_{y}, dans laquelle 1,00 < x < 1,20 et dans laquelle 0,01 < y < 0,10, d'épaisseur comprise entre 10 et 80 nm, de préférence entre 20 et 60 nanomètres, et de préférence encore entre 30 et 50 nanomètres,
- une couche à base de nitrure de silicium, d'épaisseur comprise entre 20 et 80 nm, de préférence entre 25 et 70 nm,
- une deuxième couche d'oxynitrure de titane de formule générale TiNₓO_{y}, dans laquelle 1,00 < x < 1,20 et dans laquelle 0,01 < y < 0,10, d'épaisseur comprise entre 10 et 80 nm, de préférence entre 20 et 60 nanomètres, et de préférence encore entre 30 et 50 nanomètres,
- une couche à base de nitrure de silicium, d'épaisseur comprise entre 20 et 80 nm, de préférence entre 25 et 70 nm,
éventuellement une couche supérieure à base d'un oxyde de titane, d'un oxyde de zirconium ou d'un oxyde de titane et de zirconium.

12. Article verrier selon l'une des revendications 1 à 6, comprenant au moins un substrat verrier et un empilement de couches déposées sur au moins une face dudit substrat, ledit empilement de couches comprenant au moins :
- une première couche d'oxynitrure de titane de formule générale TiNₓO_{y}, dans laquelle 1,00 < x < 1,20 et dans laquelle 0,01 < y < 0,10, l'épaisseur de ladite première couche d'oxynitrure de titane étant comprise entre 10 et 80 nanomètres,
- une seconde couche métallique à base de chrome, de nickel, de titane, de niobium ou d'un mélange d'au moins deux de ces éléments, ladite seconde couche étant éventuellement nitrurée,
ladite seconde couche étant disposée entre la première couche d'oxynitrure de titane et ladite face dudit substrat.

13. Article verrier selon la revendication précédente, dans lequel ladite seconde couche métallique est à base de nitrure de chrome et de nickel (NiCrN).

14. Article verrier selon l'une des revendications 12 ou 13, dans lequel l'empilement comprend ou est constitué par la succession des couches suivantes, à partir de la surface du substrat verrier :
- au moins ladite seconde couche métallique à base de chrome, de nickel, de titane, de niobium ou d'un mélange d'au moins deux de ces éléments, ladite couche étant éventuellement nitrurée,
- éventuellement une ou plusieurs couches inférieures de matériaux diélectriques, notamment à base de nitrure de silicium, d'épaisseur, au total, comprise entre 10 et 120 nm,
- ladite première couche d'oxynitrure de titane de formule générale TiNₓO_{y}, dans laquelle 0,01 < y < 0,10, de préférence dans laquelle 0,02 < y < 0,08, et dans laquelle 1,00 < x < 1,20, de préférence dans laquelle 1,05 < x < 1,18, d'épaisseur comprise entre 10 et 80 nm, de préférence entre 10 et 30 nanomètres, et de préférence encore entre 10 et 25 nanomètres,
- éventuellement au moins une couche métallique à base de chrome, de nickel, de titane, de niobium ou d'un mélange d'au moins deux de ces éléments, ladite couche étant éventuellement nitrurée,
- une ou plusieurs couches supérieures de matériaux diélectriques, notamment à base de nitrure de silicium, d'épaisseur physique, au total, comprise entre 10 et 100 nm,
- éventuellement une couche supérieure à base d'un oxyde de titane, d'un oxyde de zirconium ou d'un oxyde de titane et de zirconium.

15. Article verrier selon l'une des revendications 12 à 14, dans lequel l'empilement comprend ou est constitué par la succession des couches suivantes, à partir de la surface du substrat verrier :
- une couche métallique à base de chrome, de nickel, de titane, de niobium ou d'un mélange d'au moins deux de ces éléments, ladite couche étant éventuellement nitrurée, ladite couche ayant une épaisseur comprise entre 3 et 15 nanomètres, de préférence entre 5 et 10 nanomètres, ladite couche étant de préférence une couche de nickel et de chrome, de préférence encore nitrurée,
- une couche d'oxynitrure de titane de formule générale TiNₓO_{y}, dans laquelle 0,01 < y < 0,10, de préférence 0,02 < y < 0,08 et dans laquelle 1,00 < x < 1,20, de préférence 1,05 < x < 1,18, d'épaisseur comprise entre 10 et 80 nm, de préférence entre 10 et 30 nanomètres, et de préférence encore entre 10 et 25 nanomètres,
- une couche à base de nitrure de silicium, d'épaisseur comprise entre 20 et 80 nm, de préférence entre 25 et 70 nm,
- éventuellement une couche supérieure à base d'un oxyde de titane, d'un oxyde de zirconium ou d'un oxyde de titane et de zirconium.

16. Article verrier selon l'une des revendications 12 à 14, dans lequel l'empilement comprend ou est constitué par la succession des couches suivantes, à partir de la surface du substrat verrier :
- une couche métallique à base de chrome, de nickel, de titane, de niobium ou d'un mélange d'au moins deux de ces éléments, ladite couche étant éventuellement nitrurée, ladite couche ayant une épaisseur comprise entre 3 et 15 nanomètres, de préférence entre 5 et 10 nanomètres, ladite couche étant de préférence une couche de nickel et de chrome, préférentiellement nitrurée,
- une couche à base de nitrure de silicium, d'épaisseur comprise entre 50 et 120 nm, de préférence entre 70 et 100 nm,
- une couche d'oxynitrure de titane de formule générale TiNₓO_{y}, dans laquelle 0,01 < y < 0,10, de préférence 0,02 < y < 0,08 et dans laquelle 1,00 < x < 1,20, de préférence 1,05 < x < 1,18, d'épaisseur comprise entre 10 et 80 nm, de préférence entre 10 et 50 nanomètres, et de préférence encore entre 10 et 30 nanomètres,
- une couche à base de nitrure de silicium, d'épaisseur comprise entre 20 et 80 nm, de préférence entre 30 et 60 nm,
- éventuellement une couche supérieure à base d'un oxyde de titane, d'un oxyde de zirconium ou d'un oxyde de titane et de zirconium.

17. Article verrier selon l'une des revendications 1 à 6, dans lequel l'empilement comprend ou est constitué par la succession des couches suivantes, à partir de la surface du substrat verrier :
- au moins ladite seconde couche métallique à base de chrome, de nickel, de titane, de niobium ou d'un mélange d'au moins deux de ces éléments, ladite couche étant éventuellement nitrurée,
- éventuellement une ou plusieurs couches inférieures de matériaux diélectriques, notamment à base de nitrure de silicium, d'épaisseur, au total, comprise entre 10 et 120 nm,
- ladite première couche d'oxynitrure de titane de formule générale TiNₓO_{y}, dans laquelle 0,01 < y < 0,10, de préférence dans laquelle 0,02 < y < 0,08, et dans laquelle 1,00 < x < 1,20, de préférence dans laquelle 1,05 < x < 1,18, d'épaisseur comprise entre 10 et 80 nm, de préférence entre 10 et 30 nanomètres, et de préférence encore entre 10 et 25 nanomètres,
- éventuellement au moins une couche métallique à base de chrome, de nickel, de titane, de niobium ou d'un mélange d'au moins deux de ces éléments, ladite couche étant éventuellement nitrurée,
- une ou plusieurs couches supérieures de matériaux diélectriques, notamment à base de nitrure de silicium, d'épaisseur physique, au total, comprise entre 10 et 100 nm
- éventuellement une couche supérieure à base d'un oxyde de titane, d'un oxyde de zirconium ou d'un oxyde de titane et de zirconium.

18. Article verrier selon l'une des revendications précédentes, dans lequel ledit article est un vitrage ne comprenant qu'un seul substrat verrier.

19. Article verrier selon la revendication précédente, dans lequel ledit article a subi un traitement thermique tel qu'une trempe, un bombage ou encore un recuit.

20. Article verrier selon l'une des revendications 1 à 17, dans lequel ledit article est un vitrage feuilleté constitué par un ensemble d'au moins deux substrats verriers liés entre eux par un feuillet thermoplastique.

21. Article verrier selon la revendication 20, dans lequel le feuillet thermoplastique est du polyvinyl butyral (PVB).

## Patentansprüche

1. Glasartikel mit Sonnenschutzfunktion, umfassend mindestens ein Glassubstrat und einen Stapel von Schichten, die auf mindestens einer Seite des Substrats abgeschieden sind, wobei der Stapel von Schichten eine Titanoxynitridschicht mit der allgemeinen Formel TiNₓO_{y} umfasst, worin 1,00 < x < 1,20 und worin 0,01 < y < 0,10 ist, wobei der Schichtstapel aus mindestens einer solchen Titanoxynitridschicht und Schichten aus dielektrischen Materialien sowie gegebenenfalls Metallschichten auf der Basis von Chrom, Nickel, Titan, Niobium oder einer Mischung aus mindestens zwei dieser Elemente besteht, wobei die Metallschichten gegebenenfalls nitriert sind.

2. Glasartikel nach einem der vorstehenden Ansprüche, wobei 0,02 < y < 0,08 ist.

3. Glasartikel nach einem der vorstehenden Ansprüche, wobei 1,05 < x < 1,20 ist.

4. Glasartikel nach einem der vorstehenden Ansprüche, wobei die Dicke der Titanoxynitridschicht zwischen 10 und 80 Nanometer, insbesondere zwischen 10 und 60 Nanometer, beträgt.

5. Glasartikel nach einem der vorstehenden Ansprüche, wobei der Stapel unter und/oder über der Titanoxynitridschicht zusätzlich eine oder mehrere Schichten aus dielektrischem Material enthält.

6. Glasartikel nach dem vorstehenden Anspruch, wobei das oder die dielektrischen Materialien ausgewählt sind aus Siliciumnitrid, das gegebenenfalls mit Al, Zr, B, Aluminiumnitrid, Zinnoxid, einem Mischoxid von Zink oder Zinn Sn_{y}Zn_{z}Oₓ, Siliciumoxid, Titanoxid, Siliciumoxynitriden SiOₓN_{y} dotiert ist.

7. Glasartikel nach einem der vorstehenden Ansprüche, wobei der Stapel unter und/oder gegebenenfalls über der Titanoxynitridschicht zusätzlich eine Schicht aus einem Metall enthält, die gegebenenfalls teilweise oder vollständig oxidiert und/oder nitriert ist, wobei das Metall auf Chrom, Nickel, Titan, Niobium oder einer Mischung aus mindestens zwei dieser Elemente basiert, wobei die Schicht eine Dicke von weniger als 5 nm, bevorzugt eine Dicke von weniger als 3 nm, aufweist.

8. Glasartikel nach dem vorstehenden Anspruch, wobei das Metall aus Ti, Nb oder einer Legierung aus Nickel und Chrom ausgewählt ist, wobei das Metall oder die Legierung gegebenenfalls nitriert ist.

9. Glasartikel nach einem der vorstehenden Ansprüche, wobei der Stapel die Abfolge der folgenden Schichten, ausgehend von der Oberfläche des Glassubstrats, umfasst oder daraus besteht:
- eine Schicht auf Siliciumnitridbasis mit einer Dicke zwischen 20 und 80 nm,
- gegebenenfalls eine Schicht aus einem Metall, die gegebenenfalls teilweise oder vollständig oxidiert und/oder nitriert ist, wobei das Metall auf Chrom, Nickel, Titan, Niobium oder einer Mischung aus mindestens zwei dieser Elemente basiert, wobei die Schicht eine Dicke von weniger als 5 nm, bevorzugt weniger als 3 nm, aufweist,
- eine Schicht aus Titanoxynitrid mit der allgemeinen Formel TiNₓO_{y}, mit einer Dicke zwischen 10 und 80 nm, bevorzugt zwischen 15 und 60 Nanometern, und stärker bevorzugt zwischen 15 und 50 Nanometern,
- bevorzugt eine Schicht aus einem Metall, gegebenenfalls teilweise oder vollständig nitriert, wobei das Metall auf Chrom, Nickel, Titan, Niobium oder einer Mischung aus mindestens zwei dieser Elemente basiert, stärker bevorzugt eine Schicht aus einem Nitrid von Nickel und Chrom, wobei die Schicht eine Dicke von weniger als 6 nm aufweist,
- eine Schicht auf Siliziumnitridbasis mit einer Dicke zwischen 20 und 80 nm, bevorzugt zwischen 25 und 70 nm,
- gegebenenfalls eine Deckschicht auf der Basis eines Titanoxids, eines Zirkoniumoxids oder eines Oxids aus Titan und Zirkonium oder auf der Basis eines Siliziumoxids.

10. Glasartikel nach Anspruch 9, wobei die erste Schicht auf Siliziumnitridbasis eine Dicke zwischen 25 und 70 nm aufweist.

11. Glasartikel nach einem der vorstehenden Ansprüche, wobei der Stapel die Abfolge der folgenden Schichten, ausgehend von der Oberfläche des Glassubstrats, umfasst oder daraus besteht:
- eine Schicht auf Siliziumnitridbasis mit einer Dicke zwischen 20 und 80 nm, bevorzugt zwischen 25 und 70 nm,
- eine erste Schicht aus Titanoxynitrid mit der allgemeinen Formel TiNₓO_{y}, worin 1,00 < x < 1,20 ist und worin 0,01 < y < 0,10 ist, mit einer Dicke zwischen 10 und 80 nm, bevorzugt zwischen 20 und 60 Nanometern und noch stärker bevorzugt zwischen 30 und 50 Nanometern,
- eine Schicht auf Siliziumnitridbasis mit einer Dicke zwischen 20 und 80 nm, bevorzugt zwischen 25 und 70 nm,
- eine zweite Schicht aus Titanoxynitrid mit der allgemeinen Formel TiNₓO_{y}, worin 1,00 < x < 1,20 ist und worin 0,01 < y < 0,10 ist, mit einer Dicke zwischen 10 und 80 nm, bevorzugt zwischen 20 und 60 Nanometern und stärker bevorzugt zwischen 30 und 50 Nanometern,
- eine Schicht auf Siliziumnitridbasis mit einer Dicke zwischen 20 und 80 nm, bevorzugt zwischen 25 und 70 nm,
gegebenenfalls eine Deckschicht auf der Basis eines Titanoxids, eines Zirkoniumoxids oder eines Titan- und Zirkoniumoxids.

12. Glasartikel nach einem der Ansprüche 1 bis 6, umfassend mindestens ein Glassubstrat und einen Stapel von Schichten, die auf mindestens einer Seite des Substrats abgeschieden sind, wobei der Stapel von Schichten mindestens Folgendes umfasst:
- eine erste Schicht aus Titanoxynitrid mit der allgemeinen Formel TiNₓO_{y}, worin 1,00 < x < 1,20 ist und worin 0,01 < y < 0,10 ist, mit einer Dicke der ersten Schicht aus Titanoxynitrid zwischen 10 und 80 Nanometern,
- eine zweite Metallschicht auf der Basis von Chrom, Nickel, Titan, Niobium oder einer Mischung aus mindestens zwei dieser Elemente, wobei die zweite Schicht gegebenenfalls nitriert ist, wobei die zweite Schicht zwischen der ersten Schicht aus Titanoxynitrid und der Seite des Substrats angeordnet ist.

13. Glasartikel nach dem vorstehenden Anspruch, wobei die zweite Metallschicht auf Chromnitrid und Nickel (NiCrN) basiert.

14. Glasartikel nach einem der Ansprüche 12 und 13, wobei der Stapel die Abfolge der folgenden Schichten, ausgehend von der Oberfläche des Glassubstrats, umfasst oder daraus besteht:
- mindestens die zweite Metallschicht auf der Basis von Chrom, Nickel, Titan, Niobium oder einer Mischung aus mindestens zwei dieser Elemente, wobei die Schicht gegebenenfalls nitriert ist,
- gegebenenfalls eine oder mehrere untere Schichten aus dielektrischen Materialien, insbesondere auf der Basis von Siliziumnitrid, mit einer Gesamtdicke zwischen 10 und 120 nm,
- die erste Titanoxynitridschicht mit der allgemeinen Formel TiNₓO_{y}, worin 0,01 < y < 0,10 ist, worin bevorzugt 0,02 < y < 0,08 ist, und worin 1,00 < x < 1,20 ist, worin bevorzugt 1,05 < x < 1,18 ist, mit einer Dicke zwischen 10 und 80 nm, bevorzugt zwischen 10 und 30 Nanometern, und stärker bevorzugt zwischen 10 und 25 Nanometern,
- gegebenenfalls mindestens eine Metallschicht auf der Basis von Chrom, Nickel, Titan, Niobium oder einer Mischung aus mindestens zwei dieser Elemente, wobei die Schicht gegebenenfalls nitriert ist,
- eine oder mehrere Deckschichten aus dielektrischem Material, insbesondere auf der Basis von Siliziumnitrid, mit einer physikalischen Dicke von insgesamt 10 bis 100 nm,
- gegebenenfalls eine Deckschicht auf der Basis eines Titanoxids, eines Zirkoniumoxids oder eines Titan- und Zirkoniumoxids.

15. Glasartikel nach einem der Ansprüche 12 bis 14, wobei der Stapel die Abfolge der folgenden Schichten, ausgehend von der Oberfläche des Glassubstrats, umfasst oder daraus besteht:
- eine Metallschicht auf der Basis von Chrom, Nickel, Titan, Niobium oder einer Mischung aus mindestens zwei dieser Elemente, wobei die Schicht gegebenenfalls nitriert ist, wobei die Schicht eine Dicke zwischen 3 und 15 Nanometern, bevorzugt zwischen 5 und 10 Nanometern, aufweist, wobei die Schicht bevorzugt eine Schicht aus Nickel und Chrom, stärker bevorzugt nitriert, ist,
- eine Schicht aus Titanoxynitrid mit der allgemeinen Formel TiNₓO_{y}, worin 0,01 < y < 0,10 ist, bevorzugt 0,02 < y < 0,08 ist, und worin 1,00 < x < 1,20 ist, bevorzugt 1,05 < x < 1,18 ist, mit einer Dicke zwischen 10 und 80 nm, bevorzugt zwischen 10 und 30 Nanometern und stärker bevorzugt zwischen 10 und 25 Nanometern,
- eine Schicht auf Siliziumnitridbasis mit einer Dicke zwischen 20 und 80 nm, bevorzugt zwischen 25 und 70 nm,
- gegebenenfalls eine Deckschicht auf der Basis eines Titanoxids, eines Zirkoniumoxids oder eines Titan- und Zirkoniumoxids.

16. Glasartikel nach einem der Ansprüche 12 bis 14, wobei der Stapel die Abfolge der folgenden Schichten, ausgehend von der Oberfläche des Glassubstrats, umfasst oder daraus besteht:
- eine Metallschicht auf der Basis von Chrom, Nickel, Titan, Niobium oder einer Mischung aus mindestens zwei dieser Elemente, wobei die Schicht gegebenenfalls nitriert ist, wobei die Schicht eine Dicke zwischen 3 und 15 Nanometern, bevorzugt zwischen 5 und 10 Nanometern, aufweist, wobei die Schicht bevorzugt eine Schicht aus Nickel und Chrom, vorzugsweise nitriert, ist,
- eine Schicht auf Siliziumnitridbasis mit einer Dicke zwischen 50 und 120 nm, bevorzugt zwischen 70 und 100 nm,
- eine Schicht aus Titanoxynitrid mit der allgemeinen Formel TiNₓO_{y}, worin 0,01 < y < 0,10 ist, bevorzugt 0,02 < y < 0,08, und worin 1,00 < x < 1,20 ist, bevorzugt 1,05 < x < 1,18, mit einer Dicke zwischen 10 und 80 nm, bevorzugt zwischen 10 und 50 Nanometern und stärker bevorzugt zwischen 10 und 30 Nanometern,
- eine Schicht auf Siliziumnitridbasis mit einer Dicke zwischen 20 und 80 nm, bevorzugt zwischen 30 und 60 nm,
- gegebenenfalls eine Deckschicht auf der Basis eines Titanoxids, eines Zirkoniumoxids oder eines Titan- und Zirkoniumoxids.

17. Glasartikel nach einem der Ansprüche 1 bis 6, wobei der Stapel die Abfolge der folgenden Schichten, ausgehend von der Oberfläche des Glassubstrats, umfasst oder daraus besteht:
- mindestens die zweite Metallschicht auf der Basis von Chrom, Nickel, Titan, Niobium oder einer Mischung aus mindestens zwei dieser Elemente, wobei die Schicht gegebenenfalls nitriert ist,
- gegebenenfalls eine oder mehrere untere Schichten aus dielektrischen Materialien, insbesondere auf der Basis von Siliziumnitrid, mit einer Gesamtdicke zwischen 10 und 120 nm,
- die erste Titanoxynitridschicht mit der allgemeinen Formel TiNₓO_{y}, worin 0,01 < y < 0,10 ist, worin bevorzugt 0,02 < y < 0,08 ist, und worin 1,00 < x < 1,20 ist, worin bevorzugt 1,05 < x < 1,18 ist, mit einer Dicke zwischen 10 und 80 nm, bevorzugt zwischen 10 und 30 Nanometern, und stärker bevorzugt zwischen 10 und 25 Nanometern,
- gegebenenfalls mindestens eine Metallschicht auf der Basis von Chrom, Nickel, Titan, Niobium oder einer Mischung aus mindestens zwei dieser Elemente, wobei die Schicht gegebenenfalls nitriert ist,
- eine oder mehrere Deckschichten aus dielektrischen Materialien, insbesondere auf der Basis von Siliziumnitrid, mit einer physikalischen Gesamtdicke zwischen 10 und 100 nm
- gegebenenfalls eine Deckschicht auf der Basis eines Titanoxids, eines Zirkoniumoxids oder eines Titan- und Zirkoniumoxids.

18. Glasartikel nach einem der vorstehenden Ansprüche, wobei der Artikel eine Verglasung ist, die nur ein einziges Glassubstrat umfasst.

19. Glasartikel nach dem vorstehenden Anspruch, wobei der Artikel einer Wärmebehandlung wie Härten, Biegen oder auch Glühen unterzogen wurde.

20. Glasartikel nach einem der Ansprüche 1 bis 17, wobei der Artikel eine Verbundverglasung ist, die aus einer Anordnung von mindestens zwei Glassubstraten besteht, die durch eine thermoplastische Folie miteinander verbunden sind.

21. Glasartikel nach Anspruch 20, wobei die thermoplastische Folie Polyvinylbutyral (PVB) ist.

## Claims

1. A glass article with a solar-control function comprising at least one glass substrate and a stack of layers deposited on at least one face of said substrate, said stack of layers comprising a layer of titanium oxynitride of general formula TiNₓO_{y}, wherein 1.00 < x < 1.20 and wherein 0.01 < y < 0.10, said stack of layers consisting of at least one such titanium oxynitride layer and of layers of dielectric materials, and also optionally of metallic layers based on chromium, nickel, titanium, niobium or a mixture of at least two of these elements, said metallic layers optionally being nitrided.

2. The glass article as claimed in one of the preceding claims, wherein 0.02 < y < 0.08.

3. The glass article as claimed in either of the preceding claims, wherein 1.05 < x < 1.20.

4. The glass article as claimed in one of the preceding claims, wherein the thickness of said titanium oxynitride layer is between 10 and 80 nanometers, in particular between 10 and 60 nanometers.

5. The glass article as claimed in one of the preceding claims, wherein the stack further incorporates, below and/or above the titanium oxynitride layer, one or more layers of dielectric materials.

6. The glass article as claimed in the preceding claim, wherein the dielectric material or materials are chosen from silicon nitride optionally doped with Al, Zr or B, aluminum nitride, tin oxide, a mixed oxide of zinc or tin Sn_{y}Zn_{z}Oₓ, silicon oxide, titanium oxide and silicon oxynitrides SiOₓN_{y}.

7. The glass article as claimed in one of the preceding claims, wherein the stack further incorporates, below and/or optionally above the titanium oxynitride layer, a layer of a metal, optionally partially or completely oxidized and/or nitrided, said metal being based on chromium, nickel, titanium, niobium or a mixture of at least two of these elements, said layer having a thickness of less than 5 nm, preferably a thickness of less than 3 nm.

8. The glass article as claimed in the preceding claim, wherein the metal is chosen from Ti, Nb or an alloy of nickel and chromium, said metal or alloy being optionally nitrided.

9. The glass article as claimed in one of the preceding claims, wherein the stack comprises or consists of the series of the following layers, starting from the surface of the glass substrate:
- a layer based on silicon nitride, having a thickness of between 20 and 80 nm, preferably between 25 and 70 nm,
- optionally a layer of a metal, optionally partially or completely oxidized and/or nitrided, said metal being based on chromium, nickel, titanium, niobium or a mixture of at least two of these elements, said layer having a thickness of less than 5 nm, preferably less than 3 nm,
- a layer of titanium oxynitride of general formula TiNₓO_{y}, having a thickness of between 10 and 80 nm, preferably between 15 and 60 nanometers, and more preferably between 15 and 50 nanometers,
- preferably a layer of a metal, optionally partially or completely nitrided, said metal being based on chromium, nickel, titanium, niobium or a mixture of at least two of these elements, more preferably a layer of a nitride of nickel and chromium, said layer having a thickness of less than 6 nm,
- a layer based on silicon nitride, having a thickness of between 20 and 80 nm, preferably between 25 and 70 nm.
- optionally an upper layer based on a titanium oxide, a zirconium oxide or a titanium zirconium oxide or based on a silicon oxide.

10. The glass article as claimed in the claim 9, wherein the first layer based on silicon nitride has a thickness between 25 and 70 nm.

11. The glass article as claimed in one of the preceding claims, wherein the stack comprises or consists of the series of the following layers, starting from the surface of the glass substrate:
- a layer based on silicon nitride, having a thickness of between 20 and 80 nm, preferably between 25 and 70 nm,
- a first layer of titanium oxynitride of general formula TiNₓO_{y}, wherein 1.00 < x < 1.20 and wherein 0.01 < y < 0.10, having a thickness of between 10 and 80 nm, preferably between 20 and 60 nanometers, and more preferably between 30 and 50 nanometers,
- a layer based on silicon nitride, having a thickness of between 20 and 80 nm, preferably between 25 and 70 nm,
- a second layer of titanium oxynitride of general formula TiNₓO_{y}, wherein 1.00 < x < 1.20 and wherein
0.01 < y < 0.10, having a thickness of between 10 and 80 nm, preferably between 20 and 60 nanometers, and more preferably between 30 and 50 nanometers,
- a layer based on silicon nitride, having a thickness of between 20 and 80 nm, preferably between 25 and 70 nm,
optionally an upper layer based on a titanium oxide, a zirconium oxide or a titanium zirconium oxide.

12. The glass article as claimed in one of claims 1 to 6, comprising at least one glass substrate and a stack of layers deposited on at least one face of said substrate, said stack of layers comprising at least:
- a first layer of titanium oxynitride of general formula TiNₓO_{y}, wherein 1.00 < x < 1.20 and wherein 0.01 < y < 0.10, the thickness of said first layer of titanium oxynitride being between 10 and 80 nanometers,
- a metallic second layer based on chromium, nickel, titanium, niobium or a mixture of at least two of these elements, said second layer optionally being nitrided,
said second layer being positioned between the first layer of titanium oxynitride and said face of said substrate.

13. The glass article as claimed in the preceding claim, wherein said metallic second layer is based on chromium nickel nitride (NiCrN).

14. The glass article as claimed in either of claims 11 and 12, wherein the stack comprises or consists of the series of the following layers, starting from the surface of the glass substrate:
- at least said metallic second layer based on chromium, nickel, titanium, niobium or a mixture of at least two of these elements, said layer being optionally nitrided,
- optionally one or more lower layers of dielectric materials, in particular based on silicon nitride, having a thickness, in total, of between 10 and 120 nm,
- said first layer of titanium oxynitride of general formula TiNₓO_{y}, wherein 0.01 < y < 0.10, preferably wherein 0.02 < y < 0.08, and wherein 1.00 < x < 1.20, preferably wherein 1.05 < x < 1.18, having a thickness of between 10 and 80 nm, preferably between 10 and 30 nanometers, and more preferably between 10 and 25 nanometers,
- optionally at least one metallic layer based on chromium, nickel, titanium, niobium or a mixture of at least two of these elements, said layer being optionally nitrided,
- one or more upper layers of dielectric materials, in particular based on silicon nitride, having a physical thickness, in total, of between 10 and 100 nm,
- optionally an upper layer based on a titanium oxide, a zirconium oxide or a titanium zirconium oxide.

15. The glass article as claimed in one of claims 11 to 13, wherein the stack comprises or consists of the series of the following layers, starting from the surface of the glass substrate:
- a metallic layer based on chromium, nickel, titanium, niobium or a mixture of at least two of these elements, said layer being optionally nitrided, said layer having a thickness of between 3 and 15 nanometers, preferably between 5 and 10 nanometers, said layer preferably being a layer of nickel and chromium, more preferably which is nitrided,
- a layer of titanium oxynitride of general formula TiNₓO_{y}, wherein 0.01 < y < 0.10, preferably 0.02 < y < 0.08, and wherein 1.00 < x < 1.20, preferably 1.05 < x < 1.18, having a thickness of between 10 and 80 nm, preferably between 10 and 30 nanometers, and more preferably between 10 and 25 nanometers,
- a layer based on silicon nitride, having a thickness of between 20 and 80 nm, preferably between 25 and 70 nm,
- optionally an upper layer based on a titanium oxide, a zirconium oxide or a titanium zirconium oxide.

16. The glass article as claimed in one of claims 11 to 13, wherein the stack comprises or consists of the series of the following layers, starting from the surface of the glass substrate:
- a metallic layer based on chromium, nickel, titanium, niobium or a mixture of at least two of these elements, said layer being optionally nitrided, said layer having a thickness of between 3 and 15 nanometers, preferably between 5 and 10 nanometers, said layer preferably being a layer of nickel and chromium, more preferably which is nitrided,
- a layer based on silicon nitride, having a thickness of between 50 and 120 nm, preferably between 70 and 100 nm,
- a layer of titanium oxynitride of general formula TiNₓO_{y}, wherein 0.01 < y < 0.10, preferably 0.02 < y < 0.08, and wherein 1.00 < x < 1.20, preferably 1.05 < x < 1.18, having a thickness of between 10 and 80 nm, preferably between 10 and 50 nanometers, and more preferably between 10 and 30 nanometers,
- a layer based on silicon nitride, having a thickness of between 20 and 80 nm, preferably between 30 and 60 nm,
- optionally an upper layer based on a titanium oxide, a zirconium oxide or a titanium zirconium oxide.

17. The glass article as claimed in one of claims 1 to 6, wherein the stack comprises or consists of the series of the following layers, starting from the surface of the glass substrate:
- at least said metallic second layer based on chromium, nickel, titanium, niobium or a mixture of at least two of these elements, said layer being optionally nitrided,
- optionally one or more lower layers of dielectric materials, in particular based on silicon nitride, having a thickness, in total, of between 10 and 120 nm,
- said first layer of titanium oxynitride of general formula TiNₓO_{y}, wherein 0.01 < y < 0.10, preferably wherein 0.02 < y < 0.08, and wherein 1.00 < x < 1.20, preferably wherein 1.05 < x < 1.18, having a thickness of between 10 and 80 nm, preferably between 10 and 30 nanometers, and more preferably between 10 and 25 nanometers,
- optionally at least one metallic layer based on chromium, nickel, titanium, niobium or a mixture of at least two of these elements, said layer being optionally nitrided,
- one or more upper layers of dielectric materials, in particular based on silicon nitride, having a physical thickness, in total, of between 10 and 100 nm,
- optionally an upper layer based on a titanium oxide, a zirconium oxide or a titanium zirconium oxide.

18. The glass article as claimed in one of the preceding claims, wherein said article is a glazing comprising only a single glass substrate.

19. The glass article as claimed in the preceding claim, wherein said article has undergone a heat treatment such as a tempering, a bending or else an annealing.

20. The glass article as claimed in one of claims 1 to 16, wherein said article is a laminated glazing consisting of an assembly of at least two glass substrates connected together by a thermoplastic sheet, in particular of polyvinyl butyral (PVB)

21. The glass article as claimed in one of claim 20, wherein the thermoplastic sheet is made of polyvinyl butyral (PVB).
